(19) Europäisches Patentamt / European Patent Office / Office européen des brevets

(11) **EP 1 993 369 B1**

(12) **EUROPEAN PATENT SPECIFICATION**

(45) Date of publication and mention
of the grant of the patent:
**06.07.2016 Bulletin 2016/27**

(21) Application number: **07704352.9**

(22) Date of filing: **05.02.2007**

(51) Int Cl.:
*A23D 7/01* (2006.01)          *A23D 7/005* (2006.01)
*A23L 9/20* (2016.01)          *A23C 20/00* (2006.01)
*C11C 3/10* (2006.01)

(86) International application number:
**PCT/EP2007/051068**

(87) International publication number:
**WO 2007/096243 (30.08.2007 Gazette 2007/35)**

(54) **NON-DAIRY PRODUCT**

MILCHFREIES PRODUKT

PRODUIT NON-LAITIER

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.02.2006 EP 06075379**

(43) Date of publication of application:
**26.11.2008 Bulletin 2008/48**

(73) Proprietors:
• **Unilever N.V.**
**3013 AL Rotterdam (NL)**
Designated Contracting States:
**AT BE BG CH CZ DE DK EE ES FI FR GR HU IS IT
LI LT LU LV MC NL PL PT RO SE SI SK TR**
• **Unilever PLC**
**London**
**EC4Y 0DY (GB)**
Designated Contracting States:
**CY GB IE**

(72) Inventors:
• **AVRAMIS, Constantina, Avramopoulou**
**NL-3133 AT Vlaardingen (NL)**
• **VAN KEMPEN, Gijsbert, Michiel, Peter**
**NL-3133 AT Vlaardingen (NL)**
• **REIFFERS-MAGNANI, Christel, Karine**
**F-75015 Paris (FR)**

(74) Representative: **Brooijmans, Rob Josephina
Wilhelmus**
**Unilever Patent Group**
**Olivier van Noortlaan 120**
**3133 AT Vlaardingen (NL)**

(56) References cited:
WO-A-03/043430          WO-A-2005/041676
US-A1- 2005 220 966

• BELITZ H-D; GROSCH W: "FOOD CHEMISTRY"
1999, SPRINGER-VERLAG , XP002385385 page
168, column 169; figure 3.7; table 3.14

## Description

Our invention concerns non-dairy water continuous products with a hardness which makes them suitable for application as spreadable and/or spoonable cream alternatives and in particular as cream cheese alternatives

Non-dairy products, like creams and spreads are products wherein at least part of the dairy fat and/or protein is replaced by vegetable proteins or fat. In general, liquid oils like vegetables oils and also marine oils are regarded as being more healthy than dairy fat like milk fat and butter fat as the unsaturated fatty acid content in vegetable oils are higher than in dairy fat. Furthermore, especially natural vegetable oils that have not undergone hydrogenation have a lower trans unsaturated fatty acid content than dairy fats.

Non-diary products like creams are known from a great number of publications such as e.g. the following references: EP 540085 and EP 540087 from which soured spoonable cream alternatives are known based on fat mixtures of liquid oil and hardened lauric fats, while also some butterfat can be present, WO 03/043430 from which spreadable cream alternatives are known that display a Stevens hardness of 100 to 500 grams.

However often these products contain still some amounts of diary fat like butterfat or milk fat. Products with some dairy fat often have a better mouthfeel than products with 100% vegetable fat due to the good melting behaviour of butterfat and milkfat. Upon temperature cycling, instability problems like syneresis are associated, i.e. water exudation, and less firmness are encountered in 100% vegetable fat non-dairy products.

Gelatin is often added to control the mouthfeel and syneresis. We found that compositions without the gelatin display less acceptable oral mouthfeel. However the addition of gelatin to non-dairy products also has a number of draw backs such as the cream is no longer kosher and creams wherein gelatin is present are less accepted nowadays by the consumer, e.g. due to concerns on using bone marrow in relation to mad cows disease. Furthermore products with gelatin are not suitable for vegetarians.

US2005/0220966 discloses a process for preparing spoonable soured non-diary cream with reduced syneresis. A composition was prepared with sunflower oil, however no spread is disclosed.

WO2005/041676 discloses water continuous acidified emulsions that can be used as spreads. The fats of WO2005/041676 have a combined amount of triglycerides having 3 unsaturated fatty acids (U3) and triglycerides having two saturated fatty acids with chain length of C16 or more and one unsaturated fatty acid (H2U) of less than 30 wt%.

It is therefore an object of the invention to provide a non-dairy product wherein the fat is 100% vegetable. A further object of the invention is to provide a non-dairy product that does not contain gelatin. Another object of the invention is to provide a stable product that is less prone to syneresis. Yet another object of the invention is to provide a product that has a pleasant mouthfeel.

One or more of the objects are attained by a water-continuous non-dairy product comprising 10 to 50 wt% of fat, which is essentially gelatin free, having pH of between 3 and 5.4, wherein at least 90 wt% of the fat is a vegetable fat and/or a marine fat and having an amount of U3 of at least 22 wt%, a combined amount of U3 and H2U of at least 30 wt% and an amount of TAG cluster MX of less than 70 wt%.

## Detailed description of the invention

The non-dairy product according to the invention are water continuous, meaning the fat is dispersed in a continuous water phase. The non-dairy product according to the invention is essentially gelatin free meaning that no gelatin is added during the process of making the non-diary product. Preferably no gelatin is present in the non-diary product. The products contain less than 1 wt% of gelatin on total product, more preferably less than 0.5 wt% or even less than 0.1 wt%, or even 0.

The product of the present invention have a pH of between 3 to 5.4 preferably between 4.2 to 5.2, more preferably between 4.5 and 5.0, and most preferably between 4.3 and 4.7. Acidification to this pH can be obtained by any suitable method such as microbial acidification or chemical acidification for example using glucono deltalactone, citric acid, lactic acid or another acidifying agent. The pH can be further adjusted by the use of a base such as sodium hydroxide. Preferably the pH is attained by acidification of the starting ingredients.

The fat of the non-dairy product is a fat that is at least 90 wt% vegetable fat and/or marine oil. Preferably 100 wt% of the fat is vegetable.

The fat according to the invention has an amount of U3 of at least 22 wt%. For the purpose of the invention, U3 are triglycerides wherein three U fatty acids are attached. In this context U stands for a fatty acid that is unsaturated. Preferably the chain length of the U-fatty acid is at least 12 atoms. Preferred U fatty acids are selected from the group consisting of oleic acid, linoleic acid, alpha- linolenic acid, arachidonic acid (AA), eicosapentaenoic acid (EPA), and docosahexaenoic acid (DHA). In one U3 triglyceride the U fatty acids need not to be the same, they may within one triglyceride molecule vary in length and saturation. For example a triglyceride with both oleic and linoleic acid is encompassed. Preferred products according to the invention have a fat wherein the amount of U3 is at least 25 wt% more preferably at least 27 wt% and most preferably at least 28 wt%. The weight percentage is on fat phase.

The fat according to the invention has an combined amount U3 and H2U of at least 30 wt%. For the purpose of the invention H2U are triglycerides wherein two H fatty acids and one U fatty acid is attached. A H fatty acid is a saturated fatty acid of C16 length or more. Preferred H fatty acids are selected from the group consisting of palmitic acid, stearic acid, and archidic acid. A U fatty acid is a unsaturated fatty acid. The stereo chemistry of the triglyceride is not of importance. H2U may be a triglyceride wherein a H and a U fatty acid are present on the 1- and 3-position and a H on the 2- position (HHU) or wherein the terminal positions are occupied by H fatty acids and the middle position is a U fatty acid (HUH). Preferably the combined amount of U3 + HU2 is at least 20 wt%, preferably at least 25 wt% and more preferably at least 30 wt%.

The fat according to the invention also has an amount of a TAG cluster MX of less than 70 wt%. The TAG cluster MX is any combination of one or more TAG groups selected from the group of TAG groups consisting of HM2, M3, MSh2, and M2Sh.

HM2 is a triglyceride with one H fatty acid and two M fatty acids. An H fatty acid is a saturated fatty acid with a chain length of C16 or more. A M fatty acid is a saturated fatty acid with a chain length of C12 to C14, such as lauric and mystric acid. Preferably the amount of HM2 in the fat is less than 60 wt% more preferably less than 50 wt% and most preferably less than 45 wt%.

M3 are triglycerides wherein three M fatty acids are attached. In one M3 triglyceride the M fatty acids need not to be the same, they may within one triglyceride molecule vary in length and saturation. For example a triglyceride with both lauric and myristic acid is encompassed.

MSh2 is a triglyceride with one M fatty acid and two Sh fatty acids. A Sh fatty acid is a saturated fatty acid with a chain length of C4 to C10, such as butyric (C4), caproic (C6), caprylic (C8), capric (C10) acid.

M2Sh are triglycerides wherein two M fatty acids and one Sh fatty acid is attached.

The fat comprises a hardstock fat. A hardstock fat is a fat which is solid at room temperature and provides structure. Suitable hardstock fats are palm oil, palm kernel fat, coconut fat, babassu fat, shea fat and combinations and fractions thereof. These fats may have been subjected to randomisation. However enzymatic rearrangement is highly preferred. To preserve their naturalness the fats have preferably not been subjected to modification such as chemical interesterification, wet fractionation and hydrogenation.

In addition to the hardstock fat, the fat of the present invention may comprises another triglyceride fat. This triglyceride fat is preferably chosen from the group comprising palm oil, olive oil, sunflower oil, soy bean oil, rapeseed oil, safflower, linseed, flaxseed, marine or a combination thereof. Most preferred the oil is high in polyunsaturated fatty acid level because of the positive effect this may have on cholesterol level in blood. Examples of such oils are sunflower oil, rapeseed oil, linseed oil, fish oil, algae oil, and safflower oil. Fully or partially hardened versions and fractions of these fats are also very suitable. The amount of butterfat does not exceed 10 wt% on total fat. The product of the present invention may include functional ingredients like sterols or sterols esters, stanols or stanol esters. Preferably the sterol and/or stanol esters are fatty acid esters.

In a preferred embodiment the product according to the invention further comprises a thickener selected from the group comprising guar gum, locust bean gum, carrageenan, alginate, pectin, tara gum, xanthan gum, starches, methylcellulose, carboxymethylcellulose or a combination thereof. Preferably the level of thickener is from 0.01 to 3 wt%, preferably from 0.2 to 2.5 wt%.

The amount of protein in the non-dairy product is from 0.5 to 15 wt%. To prevent the product from imparting a thick, proteinaceous mouthfeel such as given by fresh cheese, the amount of protein is preferably below 12 wt%. More preferred the amount of protein is from 1 to 6 wt%, more preferred from 2 to 5 wt%, even more preferred from 2 to 4 wt%.

Preferably the non-dairy cream comprises protein derived from buttermilk and/or protein derived from skim milk. The buttermilk and skim milk from which the protein is derived may be in any suitable physical form such as liquid, paste or powder. In view of process efficiency and supply chain simplicity, the protein is preferably added in the form of butter milk powder or skim milk powder or whey protein concentrate or a combination thereof.

Optionally the composition comprises an emulsifier. The emulsifier can be one single emulsifier or a combination of several. Preferably the emulsifier is selected from the group comprising monoglycerides, diglycerides, phospholipids, lecithins, polyglycerol esters, diacetyl tartaric acid esters of monoglycerides, polyoxy sorbitan esters, citric acid esters or a combination thereof. The preferred amount of emulsifier is from 0.001 to 2 wt%, more preferred from 0.01 to 1 wt%.

The product optionally comprises further ingredients such as colouring agents, flavour (concentrates), salt, sweetener, e.g. sugar, particulates e.g. herbs or a combination thereof.

Preferred products according to the invention are spreadable products. Spreadable means that an even layer of the product can be applied to a piece of bread without tearing the bread.

Products preferably have a firmness of between 50 and 500g, preferably between 100-250g.

Examples

Experimental:

Firmness

The firmness of the products is determined by measuring the force required to penetrate a cylindrical probe in the product. The peak force (by custom expressed in gram, g; 1 g = 9.81 mN) is recorded, and averaged over triplicate measurements.

Sample height 5 cm; cylindrical probe of 0.5 inch thickness; compression rate 2 mm/s; penetration depth 20 mm. A suitable machine may be a Stable Micro Systems TA-XT2 Texture Analyzer.

Droplet size $d_{3,2}$ value measurements

O/w emulsions were filled to a height of 15 mm in NMR tubes of 10 mm diameter, and thermally equilibrated for 30 min at 20 °C. A restricted diffusion-based droplet size was obtained by means of pfg-NMR using a Bruker Minispec MQ20. The details of the technique are discussed by Goudappel et al (Journal of Colloid and Interface Science 239, (2001) 535-542). A measurement yields values for the volume weighted geometric mean diameter $d_{3,3}$ and the width of the droplet size distribution when plotted as a function of the logarithm of the diameter $\sigma$. These parameters can be converted to the surface weighted mean diameter $d_{3,2}$ using the relation $d_{3,2}=d_{3,3}\cdot\exp(-\sigma^2/2)$. Measurements were carried out in triplicate and results are expressed in terms of average $d_{3,2}$ values. Definitions of droplet sizes are given by Alderliesten (Particle and Particle Systems Characterization 7 (1990) 233-241, and ibid 8 (1991) 237-241).

Syneresis measurements

The forced syneresis is the whey expelled from the product after temperature elevation for a defined time. Measure weight of the tub with product (B1).

Decant the exuded water on the surface and measure the weight (W1) of the exuded water.

Cut product in two and take out half of the product. Seal tub again and store for 2 hours at 25°C. Measure weight of the open tub with product and exuded water (B2). Decant the exuded water and measure the weight (W2) of the exuded water. Seal tub again and store for another 2 hours at 25°C. Measure weight of open tub with product and exuded water (B3). Decant the exuded water and measure the weight (W3) of the exuded water. Measure weight empty tub (C).

Calculate syneresis before use:

```
W1 *100  / ( B1 - C)
```

Calculate syneresis after 2 hours:

```
W2* 100 / ( B2 - C)
```

Calculate syneresis from 2 to 4 hours:

```
W3* 100 / ( B3 - C)
```

Calculate total syneresis after 4 hours:

$$(W2+W3)*100 / (B2 - C)$$

Comparative Example A:

An oil in water emulsion not according to the invention was prepared using the fat blends of Table 1 for preparing an emulsion according to Table 2.

TABLE 1

| wt.% | Fat blend 1 | Fat blend 2 | Fat blend 3 | Fat blend 4 |
|---|---|---|---|---|
| palm olein with IV 55 | 50 | | 50 | |
| Fully hydrogenated coconut oil | 50 | 80 | | |
| Rapeseed oil | | 20 | | |
| Interesterification A | | | 50 | |
| Interesterification B | | | | 100 |
| Interesterification A: Interesterification of dry fractionated palm oil stearin with melting point 53 and palm kernel oil, and rapeseed oil<br>Interesterification B: Interesterification of Mid fluid fractionated palm oil stearin with iodine value 14 and palm kernel oil | | | | |

TABLE 2: Composition of the emulsion

| Ingredient | wt % on product |
|---|---|
| Fat | 22.0 |
| Skimmed milk powder | 6.25 |
| Whey protein concentrate (75% protein) | 1.75 |
| Locust Bean Gum (LBG) | 0.3 |
| Salt | 0.3 |
| Potassium sorbate | 0.1 |
| Citric acid (50% solution) | 0.6 |
| Demineralised water | Up to 100% |

TABLE 3: Fatty acid analysis of the fat blends

| Fatty acid (wt.%) | Fat Blend 1 | Fat Blend 2 | Fat Blend 3 | Fat Blend 4 |
|---|---|---|---|---|
| Caprylic | 3.74% | 6.01% | 0.14% | 1.42% |
| Capric | 3.24% | 5.20% | 0.14% | 1.38% |
| Lauric | 24.00% | 38.54% | 2.22% | 19.59% |
| Myristic | 10.19% | 15.65% | 1.65% | 7.06% |
| Palmitic | 23.12% | 7.66% | 39.29% | 29.84% |
| Linolenic | 0.00% | 1.98% | 0.08% | 0.10% |
| Linoleic | 4.46% | 4.07% | 9.31% | 7.37% |
| Oleic | 24.24% | 13.16% | 42.31% | 29.44% |
| Elaidic | 0.00% | 0.00% | 0.00% | 0.00% |
| Stearic | 7.01% | 7.54% | 4.65% | 3.52% |

(continued)

| Fatty acid (wt.%) | Fat Blend 1 | Fat Blend 2 | Fat Blend 3 | Fat Blend 4 |
|---|---|---|---|---|
| Arachidic | 0.00% | 0.12% | 0.22% | 0.28% |
| Behenic | 0.00% | 0.06% | 0.00% | 0.00% |
| Lacceroic | 0.00% | 0.00% | 0.00% | 0.00% |

Example 1: Oil in water emulsion according to the invention

An oil in water emulsion according to the invention was prepared using the fat blend of Table 4 for preparing an emulsion according to Table 2.

TABLE 4

| wt. % | Fat blend 5 | Fat blend 6 | Fat blend 7 | Fat blend 8 |
|---|---|---|---|---|
| fully hydrogenated coconut oil | 50 | | | |
| Palm oil | | | | |
| Rapeseed oil | 50 | 50 | 40 | 67 |
| Fully hydrogenated Palm kernel | | 50 | 20 | |
| Fully hydrogenated Sunflower oil | | | 40 | |
| Interesterification C | | | | 33 |
| Interesterification C: Interesterification of Mid fluid fractionated palm oil stearin with iodine value 14 and palm kernel oil | | | | |

TABLE 5: Composition of the emulsion

| Ingredient | wt % on product |
|---|---|
| Fat | 22.0 |
| Skimmed milk powder | 6.25 |
| Whey protein concentrate (75% protein) | 1.75 |
| Locust Bean Gum (LBG) | 0.3 |
| Salt | 0.3 |
| Potassium sorbate | 0.1 |
| Citric acid (50% solution) | 0.6 |
| Demineralised water | Up to 100% |

TABLE 6: Fatty acid analysis of the fats

| Fatty acid (wt.%) | Fat Blend 5 | Fat Blend 6 | Fat Blend 7 | Fat Blend 8 |
|---|---|---|---|---|
| Caprylic | 3.74% | 2.18% | 0.87% | 0.41% |
| Capric | 3.23% | 1.93% | 0.77% | 0.40% |
| Lauric | 23.98% | 23.63% | 9.41% | 5.52% |
| Myristic | 9.74% | 7.08% | 2.82% | 2.07% |
| Palmitic | 6.38% | 6.08% | 5.97% | 21.41% |
| Linolenic | 4.93% | 4.92% | 3.92% | 6.57% |
| Linoleic | 10.13% | 10.12% | 8.07% | 14.27% |
| Oleic | 32.10% | 31.84% | 25.37% | 46.26% |
| Elaidic | 0.00% | 0.00% | 0.00% | 0.00% |

(continued)

| Fatty acid (wt.%) | Fat Blend 5 | Fat Blend 6 | Fat Blend 7 | Fat Blend 8 |
|---|---|---|---|---|
| Stearic | 5.32% | 11.78% | 41.98% | 2.45% |
| Arachidic | 0.29% | 0.29% | 0.39% | 0.45% |
| Behenic | 0.14% | 0.14% | 0.43% | 0.19% |
| Lacceroic | 0.00% | 0.00% | 0.00% | 0.00% |

Example 2: Performance of products:

Products were subjected to intensive cycling regime. One week after production, products were placed in a 25°C temperature cabinet for 4h. Samples were then placed at 5°C cabinet for an additional 20h. This cycle was repeated twice, and subsequent measurements (firmness, syneresis, and droplet size) were taken, see table 7.

As can be seen, the products according to the invention have better stability than the comparative products. They have less syneresis and smaller droplets size while having the same firmness.

TABLE 7: Performance of products with specified fat blends

| TAG Group/Cluster (wt.%) | Fat Blend 1 | Fat Blend 2 | Fat Blend 3 | Fat Blend 4 | Fat Blend 5 | Fat Blend 6 | Fat Blend 7 | Fat Blend 8 |
|---|---|---|---|---|---|---|---|---|
| U3 | 5.6% | 16.0% | 10.0% | 3.8% | 40.0% | 40.0% | 32.0% | 53.7% |
| H2U | 21.7% | 0.2% | 36.1% | 10.6% | 0.5% | 0.5% | 0.4% | 4.9% |
| U3+H2U | 27.2% | 16.2% | 46.1% | 14.4% | 40.6% | 40.6% | 32.4% | 58.6% |
| MX | 41.0% | 65.6% | 0.5% | 12.6% | 41.0% | 36.1% | 14.5% | 4.7% |
| | | | | | | | | |
| Criteria | | | | | | | | |
| U3 > 22% | - | - | - | - | + | + | + | + |
| U3+H2U > 30% | - | - | + | - | + | + | + | + |
| [Mx < 46% | + | - | + | + | + | + | + | + |
| | | | | | | | | |
| Product Properties | | | | | | | | |
| Firmness | 236.5 | 178.5 | 208.0 | 135.3 | 227.5 | 198.0 | 321.5 | 152.0 |
| Firmness Change | 166.3 | 431.0 | 145.0 | 148.2 | 29.5 | 49.0 | 25.5 | 22.0 |
| Syneresis | 10.6 | 5.8 | 23.4 | 13.9 | 4.6 | 5.1 | 4.3 | 5.5 |
| Syneresis Change | 17.6 | 22.9 | 15.6 | 10.7 | 7.5 | 7.3 | 3.0 | 7.6 |
| Droplet Size | 1.4 | 1.7 | 2.7 | 1.4 | 1.0 | 1.2 | 1.3 | 1.3 |
| Droplet Size Change | 1.5 | 1.6 | 1.4 | 0.6 | 0.2 | 0.1 | 0.0 | 0.0 |

**Claims**

1. Water-continuous non-dairy product comprising 10 to 50 wt% of fat, which is essentially gelatin free, having pH of between 3 and 5. 4 wherein at least 90 wt% of the fat is a vegetable fat and/or marine fat and having an amount of U3 of at least 22 wt% a combined amount of U3 and H2U of at least 30 wt% and an amount of TAG cluster MX of less than 70 wt% and having a firmness of 100 to 500 g, wherein the fat comprises a hardstock fat and wherein the amount of gelatin is less than 1 wt% on total product,

wherein the firmness is determined by measuring the force required to penetrate a cylindrical probe in the product, wherein the peak force as expressed in gram, g; 1 g = 9.81 mN; is recorded, and averaged over triplicate measurements and wherein the following settings are used: sample height 5 cm; cylindrical probe of 0.5 inch thickness; compression rate 2 mm/s; penetration depth 20 mm and as measured at 5 degrees Celsius;

wherein, TAG cluster MX is any combination of one or more TAG groups selected from the group of TAG groups consisting of HM2, M3, MSh2, and M2Sh,

wherein U stands for a fatty acid that is unsaturated, H a saturated fatty acid of C16 length or more, M a saturated fatty acid with a chain length of C12 to C14 and Sh a saturated fatty acid with a chain length of C4 to C10.

2. Water-continuous product according to claim 1 wherein the amount of U3 is at least 25 wt% more preferably at least 27 wt% and most preferably at least 28 wt%.

3. Water-continuous product according to any of claim 1 to 2 wherein the amount of TAG cluster MX is less than 60 wt% more preferably less than 50 wt% and most preferably less than 45 wt%.

4. Product according to any of the claims 1 to 3 comprising functional ingredients selected from the group consisting of phytosterols, phytosterols esters, stanols, and stanol esters.

## Patentansprüche

1. Wasserkontinuierliches Nichtmilchprodukt, umfassend 10 bis 50 Gew.-% Fett, das im Wesentlichen frei von Gelatine ist, mit einem pH zwischen 3 und 5,4,

wobei mindestens 90 Gew.-% des Fetts ein Pflanzenfett und/oder ein marines Fett darstellen, und mit einem Gehalt von U3 von mindestens 22 Gew.-%, einem kombinierten Gehalt von U3 und H2U von mindestens 30 Gew.-% und einem Gehalt vom TAG-Cluster MX von weniger als 70 Gew.-% und mit einer Festigkeit von 100 bis 500 g, wobei das Fett ein Hardstockfett umfasst und wobei der Gehalt der Gelatine weniger als 1 Gew.-% des Gesamtproduktes beträgt,

wobei die Festigkeit durch Messen der Kraft bestimmt wird, die zum Eindringen einer zylindrischen Sonde in das Produkt erforderlich ist, wobei die Maximalkraft, ausgedrückt in Gramm, g; 1 g = 9,81 mN; aufgezeichnet und über dreifache Messungen gemittelt wird und wobei die folgenden Einstellungen herangezogen werden: Probenhöhe 5 cm, zylindrische Sonde von 0,5 Inch Stärke, Kompressionsrate 2 mm/s, Eindringtiefe 20 mm und gemessen bei 5 Grad Celsius,

wobei der TAG-Cluster MX jede Kombination von einer oder mehreren TAG-Gruppen ist, ausgewählt aus der Gruppe von TAG-Gruppen, bestehend aus HM2, M3, MSh2 und M2Sh, wobei U für eine Fettsäure, die ungesättigt ist, H für eine gesättigte Fettsäure von C16-Länge oder mehr, M für eine gesättigte Fettsäure mit einer Kettenlänge von C12 bis C14 und Sh für eine gesättigte Fettsäure mit einer Kettenlänge von C4 bis C10 steht.

2. Wasserkontinuierliches Produkt nach Anspruch 1, wobei der Gehalt von U3 mindestens 25 Gew.-%, bevorzugter mindestens 27 Gew.-% und höchst bevorzugt mindestens 28 Gew.-% beträgt.

3. Wasserkontinuierliches Produkt nach irgendeinem der Ansprüche 1 bis 2, wobei der Gehalt an TAG-Cluster MX weniger als 60 Gew.-%, bevorzugter weniger als 50 Gew.-% und höchst bevorzugt weniger als 45 Gew.-% beträgt.

4. Produkt nach irgendeinem der Ansprüche 1 bis 3, umfassend funktionelle Bestandteile, ausgewählt aus der aus Phytosterolen, Phytosterolestern, Stanolen und Stanolestern bestehenden Gruppe.

## Revendications

1. Produit non-laitier continu dans l'eau comprenant de 10 à 50 % en masse de graisse, lequel est pratiquement exempt de gélatine, présentant un pH entre 3 et 5,4, dans lequel au moins 90 % en masse de la graisse sont une graisse végétale et/ou une graisse marine et présentant une quantité de U3 d'au moins 22 % en masse et une quantité combinée de U3 et H2U d'au moins 30 % en masse et une quantité d'amas de TAG MX inférieure à 70 % en masse et présentant une fermeté de 100 à 500 g,

dans lequel la graisse comprend une graisse solide et dans lequel la quantité de gélatine est inférieure à 1 % en masse du produit total,

dans lequel la fermeté est déterminée en mesurant la force nécessaire pour faire pénétrer un capteur cylindrique dans le produit, dans lequel la force de pic comme exprimée en grammes, g ; 1 g = 9,81 mN ; est enregistrée, et est moyennée sur des mesures répliquées trois fois et dans lequel les ajustements suivants sont utilisés : hauteur de l'échantillon 5 cm ; capteur cylindrique d'épaisseur 0,5 pouce ; vitesse de compression 2 mm/s ; profondeur de pénétration 20 mm et mesurée à 5 degrés Celsius ;

dans lequel, l'amas de TAG MX est toute combinaison d'un ou plusieurs groupes TAG choisis dans le groupe de groupes TAG constitué de HM2, M3, MSh2, et M2Sh,

dans lequel U représente un acide gras qui est insaturé, H un acide gras saturé de longueur C16 ou supérieure, M un acide gras saturé avec une longueur de chaîne de C12 à C14 et Sh un acide gras saturé avec une longueur de chaîne de C4 à C10.

2. Produit continu dans l'eau selon la revendication 1, dans lequel la quantité de U3 est d'au moins 25 % en masse, encore mieux d'au moins 27 % en masse et bien mieux encore d'au moins 28 % en masse.

3. Produit continu dans l'eau selon l'une quelconque des revendications 1 à 2, dans lequel la quantité d'amas de TAG MX est inférieure à 60 % en masse, encore mieux inférieure à 50 % en masse et bien mieux encore inférieure à 45 % en masse.

4. Produit selon l'une quelconque des revendications 1 à 3 comprenant des ingrédients fonctionnels choisis dans le groupe constitué de phytostérols, phytostérols esters, stanols, et stanols esters.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 540085 A
- EP 540087 A
- WO 03043430 A
- US 20050220966 A
- WO 2005041676 A

### Non-patent literature cited in the description

- **GOUDAPPEL et al.** *Journal of Colloid and Interface Science,* 2001, vol. 239, 535-542
- **ALDERLIESTEN.** *Particle and Particle Systems Characterization,* 1990, vol. 7
- *PARTICLE AND PARTICLE SYSTEMS CHARACTERIZATION,* 1991, vol. 8, 237-241